# EUROPÄISCHE PATENTSCHRIFT

(11) **EP 0 835 793 B1**
(45) Veröffentlichungstag und Bekanntmachung des Hinweises auf die Patenterteilung: **16.07.2003**
(21) Anmeldenummer: 97115222.8
(22) Anmeldetag: 03.09.1997
(51) Int. Cl.: B60S 1/52

(54) **Vorrichtung zur Befeuchtung einer Scheibe eines Kraftfahrzeuges**
Device for humidifying a vehicle windscreen
Dispositif pour humidifier un pare-brise de véhicule

(30) Priorität: 09.10.1996 DE 19641460
(43) Veröffentlichungstag der Anmeldung: 15.04.1998
(73) Patentinhaber: Volkswagen Aktiengesellschaft, 38436 Wolfsburg (DE)
(72) Erfinder: Sühring, Axel, 38448 Wolfsburg (DE); Erkens, Horst, 38518 Gifhorn (DE)

(56) Entgegenhaltungen:
- DE-A- 2 534 288
- DE-A- 3 907 967
- GB-A- 2 121 318
- US-A- 4 721 251

## Beschreibung

Die Erfindung betrifft eine Vorrichtung für die Befeuchtung einer Scheibe eines Kraftfahrzeuges mit einer Spritzdüse zur Anordnung am Kraftfahrzeug, die einen ein- oder mehrteiligen Düsenkörper und einen ein- oder mehrteiligen Düsenhalter aufweist, wobei in dem Düsenkörper ein Düseneinsatz angeordnet ist, über den eine Reinigungsflüssigkeit wechselweise in unterschiedlichen Winkeln in einer Stellung spritzbar ist.

Derartige Düseneinsätze sind z. B. in der deutschen Patentschrift DE-C-25 34 288 C2 beschriebene Fluidic-Elemente.

Die dort beschriebenen Fluidic-Elemente sind fest in einem Düsenkörper angeordnet, ohne daß eine Winkelverstellung des Spritzstrahles gegenüber der Scheibe vorgesehen ist.

Das wechselweise in unterschiedlichen Winkeln auf die Scheibe Spritzen der Reinigungsflüssigkeit wird in solchen Düseneinsätzen durch einen bestimmten Strömungsmechanismus in den Düseneinsätzen selbst hervorgerufen. Werden die Zu- oder Abströmbedingungen oder die Strömungsmechanik in dem Düseneinsatz selbst verändert, dann geht auch die gewünschte Pendelbewegung des Spritzstrahles der Reinigungsflüssigkeit verloren.

Aus der europäischen Patentanmeldung EP-A-O 724 992 A1 ist eine Spritzdüse bekannt, in deren Wasserkanal ein kugelförmiger Düseneinsatz vorgesehen ist. Der kugelförmige Düseneinsatz ermöglicht es, die Spritzrichtung der Düse nach dem Einbau des Düsenkörpers im Blech der Motorhaube optimal auf den Wischbereich des Scheibenwischers auszurichten.

Die Anordnung eines kugelförmigen Einsatzes in einem Düseneinsatz wie z. B. einem Fluidic-Element mit dem eine Reinigungsflüssigkeit wechselweise in unterschiedlichen Winkein auf die Scheibe spritzbar ist oder in einem sich an den Düseneinsatz anschließenden Abströmkanal ist problematisch, da sonst der Strö-mungsmechanismus in dem Düseneinsatz beeinflußt wird, und der gewollte Schwingeffekt des aus dem Düseneinsatz abströmenden Spritzstrahles nicht erreicht wird.

Aufgabe der Erfindung ist es nun eine Möglichkeit zu finden, mit der die Spritzrichtung einer Spritzdüse, bei einer Vorrichtung nach dem Oberbegriff des Anspruchs 1 einstellbar ist.

Die Aufgabe wird erfindungsgemäß durch die Merkmale des Anspruches 1 gelöst. Vorteilhafte Aus- und Weiterbildungen werden in den Unteransprüchen gegeben.

Erfindungsgemäß wird vorgeschlagen, den Düsenkörper und/ oder den Düsenhalter oder jeweils ein Teil derselben gegenüber dem Kraftfahrzeug winklig zu verstellen.

Dabei kann die Verstellmöglichkeit zwischen zwei Teilen des Düsenkörpers, zwischen dem Düsenkörper oder einem Teil des Düsenkör-pers und dem Düsenhalter bzw. einem Teil des Düsenhalters oder zwischen dem Düsenhal-ter oder einem Teil des Düsenhalters und dem Fahrzeugteil angeordnet sein.

Dadurch wird es ermöglicht die Spritzrichtung der Spritzdüse einzustellen, ohne das weder die Zuström- oder Abströmbedingungen noch die Strömungsmechanik in dem Düseneinsatz selbst verändert werden, so daß der gewünschte Strömungseffekt, das schwingende Hin- und Her-bewegen des Spritzstrahles, erhalten bleibt. Der Auftreffort des fächerartigen Spritzstrahles kann dadurch individuell an die Bedürfnisse des Fahrzeugführer angepaßt werden.

Aufgrund der geringen Kanalweiten in solchen Düseneinsätzen muß, um das Einfrieren der Rei-nigungsflüssigkeit in den Kanälen zu verhindern, eine Beheizung des Düseneinsatzes vor-gesehen werden. Sinnvollerweise liegt die Heizeinrichtung möglichst dicht an dem Düseneinsatz, um eine gute Beheizung mit möglichst wenig Energie sicherzustellen.

Durch die Beheizung wird sichergestellt, daß alle Strömungskanäle des Düseneinsatzes sowie deren Zu- und Abströmungen nicht zufrieren und damit auch der gewollte Strömungseffekt eintritt.

Wird die Verstellmöglichkeit zwischen Düseneinsatz und Düsenkörper angeordnet, so ist der Mindestabstand zwischen Heizeinrichtung und Düseneinsatz durch die Verstelleinrichtung, sowie durch den zwangsweise erforderlichen Spalt für den Verstellweg des Düseneinsatzes vorgegeben. Dieser Abstand kann weiter reduziert werden, indem der Düseneinsatz mit der Heizeinrichtung fest in dem Düsenkörper oder einem Teil des Düsenkörpers angeordnet wird.

In diesem Fall wird die Verstellmöglichkeit an einem anderen Ort der Verbindungskette Düsenkörper - Düsenhalter - Fahrzeugteil oder deren Unterteilungen angeordnet.

Um die Anzahl der Bauteile gering zu halten, wird vorgeschlagen, daß mindestens ein Teil des Düsenhalters mit wenigstens einem Teil des Düsenkörpers einstückig ausgebildet ist. Solche Spritzdüsen werden z. B. in einer Öffnung eines Fahrzeugteiles wie z. B. der Motorraumhaube oder einem an die Scheibe angrenzenden Karosserie- bzw. Anbauteil angeordnet.

In diesem Fall liegt die Drehachse, um die der Düseneinsatz gegenüber dem Fahrzeugteil verstellbar ist, zweckmäßigerweise in einer oder parallel zu einer zumindest abschnittsweise linear verlaufenden Kante der Öffnung.

Um ein Verändern der eingestellten Position des Düseneinsatzes zu verhindert, wird vorgeschlagen eine Feststellmöglichkeit zwischen den bewegbaren Teilen oder zwischen einem bewegbaren und einem feststehenden Teil vorzusehen. Dies kann z. B. eine selbsthemmende Verstelleinrichtung wie z. B. eine Schraubverbindung, eine Verzahnung oder ein Verstellkörper mit einem spiralförmigen Außenumfang sein.

Die Erfindung wird nachfolgend anhand eines Ausführungsbeispiels näher erläutert. Die Zeichnungen zeigen
- Figur 1: Spritzdüse mit Düseneinsatz und Verstellmöglichkeit zwischen Düseneinsatz und Düsenkörper,
- Figur 2: Düseneinsatz nach EP-A-0 830 996
- Figur 3: Düseneinsatz mit Pendelkörper nach DE-A-2 534 288
- Figur 4: Spritzdüse mit zweiteiligem Düsenkörper,
- Figur 5a bis 5d: Spritzdüse mit zweiteiligem Düsenhalter.

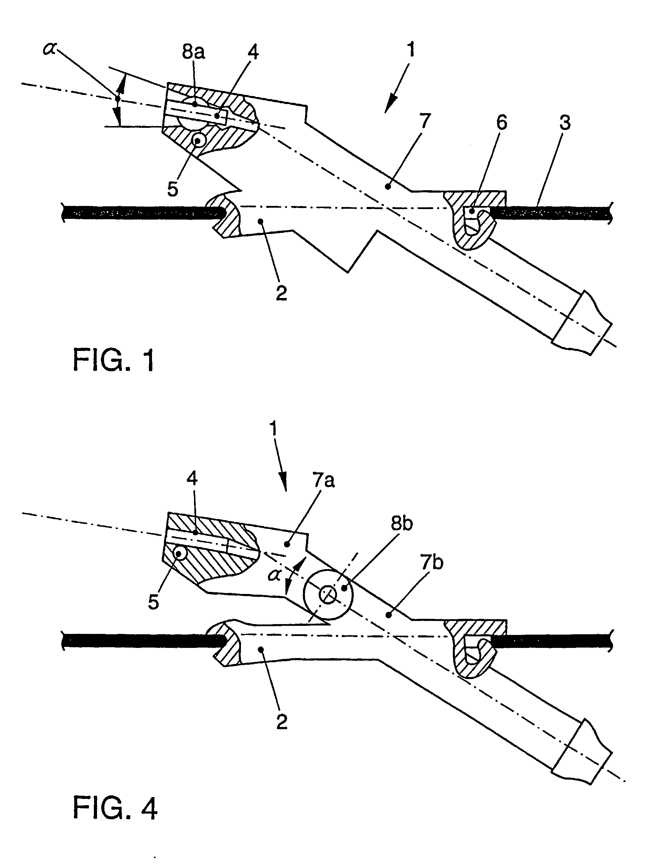

In Figur 1 ist eine Spritzdüse 1 mit einem Düsenkörper 7 und einem Düsenhalter 2 zu erkennen. Die Spritzdüse 1 wird mit dem Düsenhalter 2 in einer Öffnung 6 des Fahrzeugteiles 3 gehalten. Die Befestigung des Düsenhalters 2 in der Öffnung 6 des Fahrzeugteiles 3 erfolgt mit bekannten und nicht näher beschriebenen Rast- oder Clipselementen.

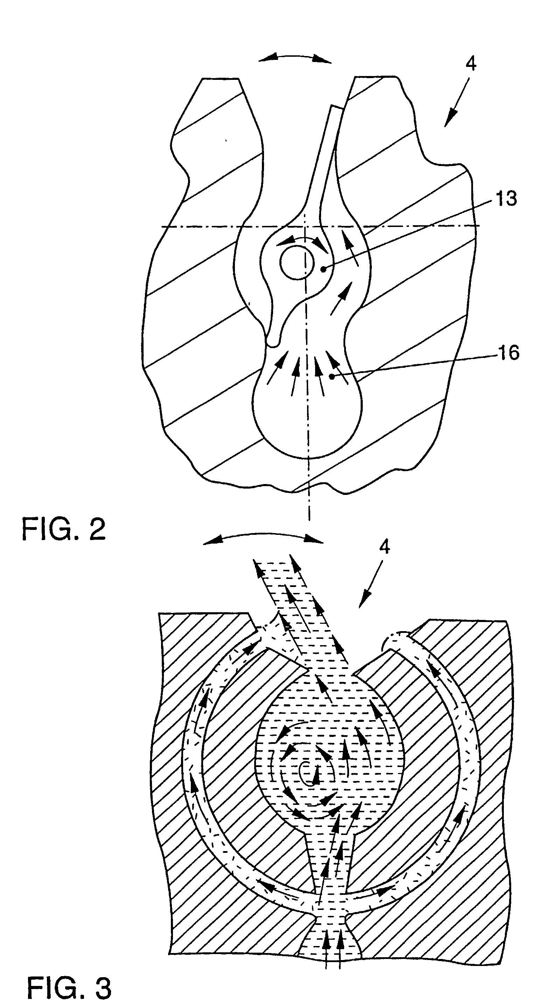

In Figur 2 und Figur 3 sind Düseneinsätze 4 zu erkennen, mit denen eine Reinigungsflüssigkeit wechselweise in unterschiedlichen Winkeln auf eine Scheibe spritzbar ist. Das Hin- und Herschwingen des Spritzstrahles wird dabei durch die Strömung selbst hervorgerufen.

Die Strömungsmechanik des Düseneinsatzes 4 in Figur 3 ist in der deutschen Patentschrift DE-C-25 34 288 beschrieben. Wird an den Zuström- oder Abströmbedingungen bzw. an den Strömungsbedingungen in dem Düseneinsatz selbst irgend etwas verändert, dann wird der Effekt des Hin- und Herschwingens des Spritzstrahles nicht erreicht.

In dem Düseneinsatz 4 in Figur 2 wird ein in dem Düseneinsatz 4 angeordneter Pendelkörper 13 durch sich verändernde Kräfte auf den Pendelkörper 13 von der Zuströmung zu einer Pendelbewegung angeregt und verursacht dadurch die Schwingbewegung des Spritzstrahles. Auch bei diesem Düseneinsatz 4 wird bei Veränderung der Strömungsmechanik in dem Düseneinsatz 4 selbst die Schwingbewegung des Spritzstrahles unter Umständen nicht erreicht.

In dem Düsenkörper 7 ist ein Düseneinsatz 4 mit einer Verstelleinrichtung 8a angeordnet. Der Düseneinsatz 4 kann mit der Verstelleinrichtung 8a um den Verstellwinkel α gegenüber dem Düsenkörper 7 und damit dem Fahrzeugteil 3 verstellt werden. Weiterhin ist möglichst dicht an dem Düseneinsatz 4 eine Heizeinrichtung 5 vorgesehen. Die elektrischen Zuleitungen zu der Heizeinrichtung 5 sowie der Wasserzuführkanal für den Düseneinsatz 4 sind in dem starr angeordneten Düsenkörper 7 untergebracht.

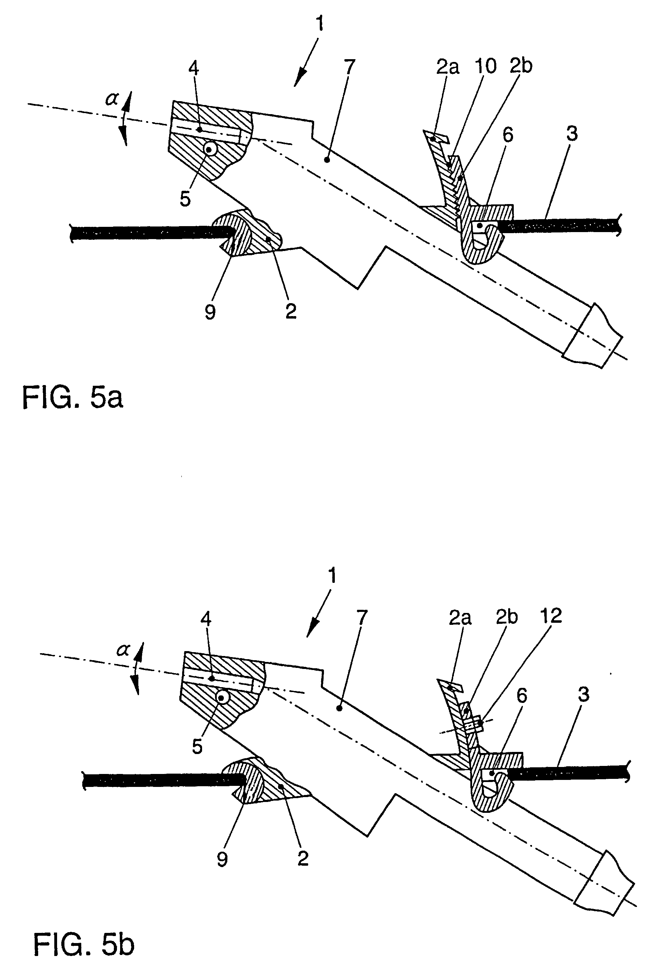

In Figur 4 ist eine Spritzdüse 1 mit den beiden Düsenkörperteilen 7a und 7b zu erkennen. Zwischen beiden Düsenkörperteilen 7a und 7b ist eine Verstelleinrichtung 8b vorgesehen. Der Düseneinsatz 4 mit der Heizeinrichtung 5 ist fest in dem Düsenkörperteil 7a angeordnet.

Da der Düseneinsatz 4 nun nicht mehr in dem Düsenkörperteil 7a bewegt werden muß, entfallen die Spalte für den notwendigen Verstellweg, und die Heizeinrichtung 5 kann dichter an den Düseneinsatz 4 herangesetzt werden. Durch die Verstelleinrichtung 8b zwischen den beiden Düsenkörperteilen 7a und 7b kann die Spritzrichtung der Reinigungsflüssigkeit auf die Scheibe über den Düseneinsatz 4 justiert werden.

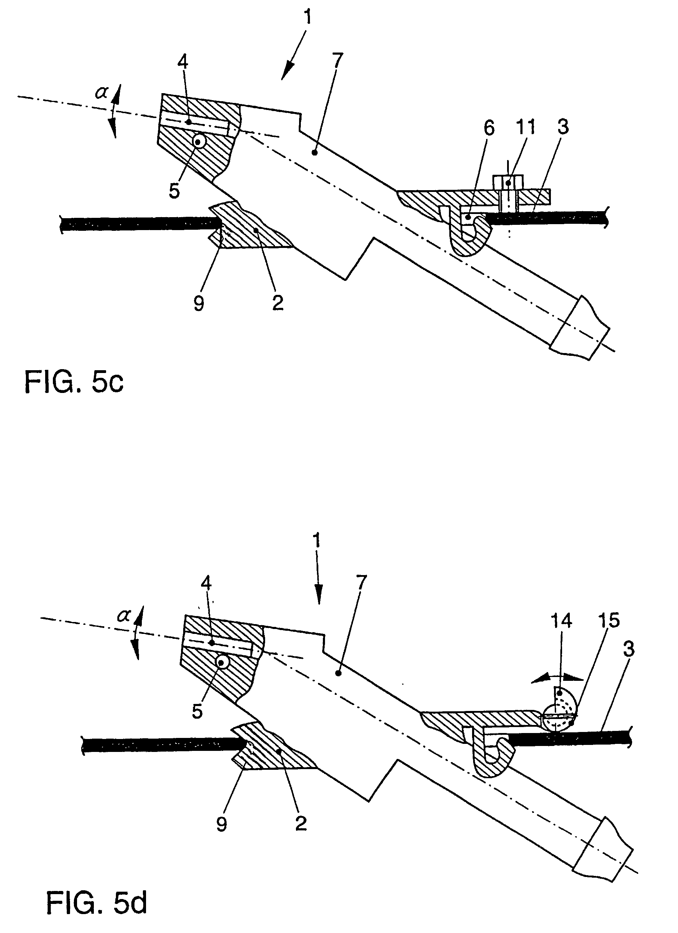

In Figur 5a; 5b; 5c und 5d ist eine Spritzdüse 1 mit einem einteiligen Düsenkörper 7 und darin fest angeordneten Düseneinsatz 4 und Heizeinrichtung 5 zu erkennen. In Figur 5a und 5b ist der Düsenhalter 2 zweiteilig mit den Düsenhalterteilen 2a und 2b ausgebildet. Das Düsenhalterteil 2a ist drehfest, vorzugsweise einstückig, mit dem Düsenkörper 7 ausgebildet. Zwischen den beiden Düsenhalterteilen 2a und 2b ist eine Verstellmöglichkeit vorgesehen, deren Drehachse vorzugsweise in einer oder parallel zu einer zumindest abschnittsweise linearen Kante 9 der Öffnung 6 liegt. Der Düsenkörper 7 und der Düseneinsatz 4 ist mit dem Düsenhalterteil 2a in dem feststehenden Düsenhalterteil 2b um den Verstellwinkel α drehbar.

In Figur 5a ist zwischen den Düsenhalterteilen 2a und 2b eine Verzahnung 10 vorgesehen. Der Eingriff der Verzahnung 10 kann durch Auseinanderdrücken der Düsenhalterteile 2a und 2b gelöst werden. Anschließend kann das Düsenhalterteil 2a mit dem Düsenkörper 7 in dem Düsenhalterteil 2b winklig zu dem Fahrzeugteil 3 verstellt werden. Nach dem Verstellen des Düsenhalterteils 2a greifen die Zähne der Verzahnung 10 wieder ineinander und halten das Düsenhalterteil 2a mit dem Düsenkörper 7 in dieser Position. Der die Verzahnung 10 aufweisende Teil des Düsenhalterteils 2a oder 2b ist hierzu sinnvollerweise federnd bewegbar ausgebildet.

Eine andere Feststellmöglichkeit ist in Figur 5b zu erkennen. Hier ist in zumindest einem der Düsenhalterteile 2a und 2b ein Langloch vorgesehen. In dem Langloch ist eine Schraubverbindung 12 angeordnet. Die Schraube kann entweder mit einer Mutter verschraubt werden oder direkt in eines der beiden Düsenhalterteile 2a und 2b eingeschraubt werden. Nach dem Einstellen der Düsenhalterteile 2a und 2b zueinander können die Düsenhalterteile 2a und 2b durch Festschrauben der Schraubverbindung 12 in dieser Position festgehalten werden.

In Figur 5c und 5 d ist der Düsenkörper 7 mit dem Düsenhalter 2 drehfest, vorzugsweise einstückig, ausgebildet. Die Verstellung des Düsenkörpers 7 mit dem Düsenhalter 2 gegenüber dem Fahrzeugteil 3 kann entweder wie in Figur 5c zu erkennen mit einer Schraube 11 und wie in Figur 5d zu erkennen mit einem Verstellkörper 14 erfolgen.

Wird die Schraube 11 in Figur 5c gedreht, dann wird der Düsenkörper 7 mit dem Düsenhalter 2 durch das Gewinde der Schraube 11 gegenüber dem Fahrzeugteil 3 um eine in der Kante 9 oder parallel zu dieser liegenden Drehachse winklig verstellt. Durch die selbsthemmende Wirkung der Schraube 11 wird der Düsenkörper und der Düsenhalter in dieser Position gehalten.

In Figur 5d ist an dem Düsenhalter 2 der Verstellkörper 14 mit dem spiralförmigen Umfang 15 angeordnet. Der Verstellkörper 14 liegt mit dem spiralförmigen Umfang 15 an dem feststehenden Fahrzeugteil 3 an. Durch Verdrehen des Verstellkörpers 14 wird der Abstand der Drehachse des Verstellkörpers zu dem Fahrzeugteil 3 verändert und damit der Düsenhalter 2 mit dem Düsenkörper 7 winklig gegenüber dem Fahrzeugteil 3 verstellt. Durch die von dem Düsenhalter 2 auf den Verstellkörper 14 ausgeübte Anpreßkraft an das Fahrzeugteil wird ein Verdrehen des Verstellkörpers 14 aus der eingestellten Position verhindert.

### BEZUGSZEICHENLISTE

- 1: Spritzdüse
- 2: Düsenhalter
- 2a; 2b: Düsenhalterteil
- 3: Fahrzeugteil
- 4: Düseneinsatz
- 5: Heizeinrichtung
- 6: Öffnung
- 7: Düsenkörper
- 7a; 7b: Düsenkörperteil
- 8a; 8b: Verstelleinrichtung
- 9: Kante
- α: Verstellwinkel
- 10: Verzahnung
- 11: Schraube
- 12: Schraubverbindung
- 13: Pendelkörper
- 14: Verstellkörper
- 15: Umfang
- 16: Zuströmung

## Patentansprüche

1. Vorrichtung für die Befeuchtung einer Scheibe eines Kraftfahrzeuges, mit einer Spritzdüse (1) zur Anordnung am Kraftfahrzeug, die einen ein- oder mehrteiligen Düsenkörper (7) und einen ein- oder mehrteiligen Düsenhalter (2) aufweist, wobei in dem Düsenkörper (7) ein Düseneinsatz (4) angeordnet ist, über den eine Reinigungsflüssigkeit wechselweise in unterschiedlichen Winkeln in einer Stellung des Düseneinsatzes (4) spritzbar ist, **dadurch gekennzeichnet, daß** der Düsenkörper (7) und/oder der Düsenhalter (2) oder jeweils ein Teil derselben gegenüber dem Kraftfahrzeug winklig verstellbar ist.

2. Vorrichtung nach Anspruch 1, **dadurch gekennzeichnet, daß** der Düsenkörper (7) mehrteilig ausgebildet ist, und daß mindestens zwei Teile (7a; 7b) des Düsenkörpers zueinander bewegbar sind, wobei einem der bewegbaren Teile (7a) des Düsenkörpers (1) der Düseneinsatz (4) zugeordnet ist.

3. Vorrichtung nach Anspruch 1 oder 2, **dadurch gekennzeichnet, daß** der Düsenkörper (7) oder wenigstens ein Teil (7b) des Düsenkörpers (7) mit dem Düsenhalter (2) oder wenigstens einem Teil (2a) des Düsenhalters (2) drehfest und/oder einstückig aus-gebildet ist.

4. Vorrichtung nach einem der Ansprüche 1 bis 3, **dadurch gekennzeichnet, daß** der Düsenkörper (7) mit dem Düsenhalter (2) in einer Öffnung (6) eines Teils (3) des Kraftfahrzeuges haltbar ist.

5. Vorrichtung nach Anspruch 4, **dadurch gekennzeichnet, daß** der Düsenkörper (7) mit dem Düsenhalter (2) in einer zumindest abschnittsweise linear verlaufenden Kurve der Öffnung oder parallel zu dieser liegenden Achse winklig verstellbar ist.

6. Vorrichtung nach einem der Ansprüche 1 bis 5, **dadurch gekennzeichnet, daß** zwi-schen den zueinander winklig verstellbaren Teilen oder zwischen einem verstellbaren und einem feststehenden Teil (2; 2a; 2b; 4; 7a; 7b; 7; 3) eine Feststellmöglichkeit vorge-sehen ist.

7. Vorrichtung nach Anspruch 6, **dadurch gekennzeichnet, daß** die Feststelleinrichtung eine selbsthemmende Verstelleinrichtung ist.

8. Vorrichtung nach Anspruch 7, **dadurch gekennzeichnet, daß** die selbsthemmende Verstelleinrichtung eine Schraubverbindung oder eine Verzahnung ist.

9. Vorrichtung nach Anspruch 7, **dadurch gekennzeichnet, daß** die selbsthemmende Verstelleinrichtung ein drehbarer Verstellkörper (14) ist, dessen Drehachse im wesentli-chen senkrecht zu der Verstellrichtung der Spritzdüse (1) verläuft und dessen Umfang (15) der Querschnittsfläche senkrecht zu der Drehachse spiralförmig ausgebildet ist, wobei der Verstellkörper (14) mit dem spiralförmigen Umfang (15) an einem feststehen-den Teil anliegt, und die Spritzdüse (1) durch Drehung des Verstellkörpers (14) winklig zu dem feststehenden Teil verstellbar ist.

10. Vorrichtung nach einem oder mehreren der Ansprüche 1 bis 9, **dadurch gekennzeichnet, daß** eine Heizeinrichtung (5) vorgesehen ist, und der Düseneinsatz (4) mit der Heizeinrichtung (5) beheizbar ist.

11. Vorrichtung nach Anspruch 10, **dadurch gekennzeichnet, daß** der Düseneinsatz (4) und die Heizeinrichtung (5) fest in dem Düsenkörper (7) oder einem Teil des Düsenkörpers (7a) angeordnet sind.

12. Vorrichtung nach einem oder mehreren der Ansprüche 1 bis 9, **dadurch gekennzeichnet, daß** der Düseneinsatz (4) zumindest um eine Achse gegenüber dem Düsenkörper (7) oder einem Teil des Düsenkörpers (7) winklig verstellbar ist.

## Claims

1. Device for applying liquid to a window of a motor vehicle, having a spray nozzle (1) which is intended for arranging on the motor vehicle and has a nozzle body (7) with one or more parts and a nozzle holder (2) with one or more parts, there being arranged in the nozzle body (7) a nozzle insert (4) via which a cleaning liquid can be sprayed alternately at different angles in one position of the nozzle insert (4), **characterized in that** the nozzle body (7) and/or the nozzle holder (2) or part of the same in each case can be angle-adjusted with respect to the motor vehicle.

2. Device according to Claim 1, **characterized in that** the nozzle body (7) is designed with more than one part, and **in that** at least two parts (7a; 7b) of the nozzle body can be moved with respect to one another, the nozzle insert (4) being assigned to one of the movable parts (7a) of the nozzle body (7).

3. Device according to Claim 1 or 2, **characterized in that** the nozzle body (7), or at least a part (7b) of the nozzle body (7), is designed in a rotationally fixed and/or integral manner with the nozzle holder (2), or at least a part (2a) of the nozzle holder (2).

4. Device according to one of Claims 1 to 3, **characterized in that** the nozzle body (7) can be retained, by way of the nozzle holder (2), in an aperture (6) of a part (3) of the motor vehicle.

5. Device according to Claim 4, **characterized in that** the spray body (7) with the spray holder (2) can be angle-adjusted in relation to an axis which is located along, or parallel to, an edge of the aperture which runs in a linear manner at least in certain sections.

6. Device according to one of Claims 1 to 5, **characterized in that** a securing means is provided between the parts which can be angle-adjusted with respect to one another or between an adjustable part and a fixed part (2; 2a; 2b; 4; 7a; 7b; 7; 3).

7. Device according to Claim 6, **characterized in that** the securing means is a self-locking adjustment device.

8. Device according to Claim 7, **characterized in that** the self-locking adjustment device is a screw-connection or a toothed arrangement.

9. Device according to Claim 7, **characterized in that** the self-locking adjustment device is a rotatable adjustment body (14), of which the axis of rotation runs essentially perpendicularly with respect to the adjustment direction of the spray nozzle (1), and of which the circumference (15) of the cross-sectional surface perpendicular to the axis of rotation is of spiral design, the adjustment body (14) resting against a fixed part by way of the spiral circumference (15), and it being possible for the spray nozzle (1) to be angle-adjusted with respect to the fixed part by rotation of the adjustment body (14).

10. Device according to one or more of Claims 1 to 9, **characterized in that** a heating device (5) is provided, and the nozzle insert (4) can be heated by the heating device (5).

11. Device according to Claim 10, **characterized in that** the nozzle insert (4) and the heating device (5) are arranged fixedly in the nozzle body (7), or in a part of the nozzle body (7a).

12. Device according to one or more of Claims 1 to 9, **characterized in that** the nozzle insert (4) can be angle-adjusted, at least around one axis, with respect to the nozzle body (7), or a part of the nozzle body (7).

## Revendications

1. Dispositif d'humidification d'un pare-brise d'un véhicule automobile, comportant une tuyère d'aspersion (1) à disposer sur le véhicule automobile, qui présente un corps de tuyère (7) en une ou plusieurs pièces et un support de tuyère (2) en une ou plusieurs pièces, une garniture de tuyère (4) étant disposée dans le corps de tuyère (7), grâce à laquelle un liquide de nettoyage peut être projeté alternativement dans des angles différents dans une position de la garniture de tuyère (4), **caractérisé en ce que** le corps de tuyère (7) et/ou le support de tuyère (2) ou respectivement une pièce de ceux-ci est réglable en angle par rapport au véhicule automobile.

2. Dispositif selon la revendication 1, **caractérisé en ce que** le corps de tuyère (7) est constitué en plusieurs pièces et qu'au moins deux pièces (7a ; 7b) du corps de tuyère sont mobiles l'une par rapport à l'autre, la garniture de tuyère (4) étant associée à une des pièces mobiles (7a) du corps de tuyère (1).

3. Dispositif selon la revendication 1 ou 2, **caractérisé en ce que** le corps de tuyère (7) ou au moins une pièce (7b) du corps de tuyère (7) est constitué avec le support de tuyère (2) ou au moins une pièce (2a) du support de tuyère (2) fixe en rotation et/ou en une seule pièce.

4. Dispositif selon une des revendications 1 à 3, **caractérisé en ce que** le corps de tuyère (7) peut être maintenu avec le support de tuyère (2) dans un orifice (6) d'une pièce (3) du véhicule automobile.

5. Dispositif selon la revendication 4, **caractérisé en ce que** le corps de tuyère (7) est réglable en angle avec le support de tuyère (2) dans une courbe s'étendant linéairement du moins par sections de l'orifice ou parallèlement à cet axe à plat.

6. Dispositif selon une des revendications 1 à 5, **caractérisé en ce qu'**entre les pièces réglables en angle les unes par rapport aux autres ou entre une pièce réglable et une pièce fixe (2 ; 2a ; 2b ; 4 ; 7a ; 7b ; 7 ; 3), une possibilité de fixation est prévue.

7. Dispositif selon la revendication 6, **caractérisé en ce que** le dispositif de fixation est un dispositif de fixation auto-bloquant.

8. Dispositif selon la revendication 7, **caractérisé en ce que** le dispositif de fixation auto-bloquant est un raccord à vis ou un engrenage.

9. Dispositif selon la revendication 7, **caractérisé en ce que** le dispositif de fixation auto-bloquant est un corps de réglage pouvant pivoter (14) dont l'axe de rotation s'étend substantiellement à la verticale du dispositif de réglage de la tuyère d'aspersion (1) et dont la périphérie (15) de la surface de section transversale est réalisée en forme hélicoïdale à la verticale de l'axe de rotation, le corps de réglage (14) étant en contact avec la périphérie de forme hélicoïdale (15) sur une pièce fixe, et la tuyère d'aspersion (1) étant réglable en angle par rapport à la pièce fixe par rotation du corps de réglage (14).

10. Dispositif selon une ou plusieurs des revendications 1 à 9, caractérisé en qu'un dispositif de chauffage (5) est prévu et que la garniture de tuyère (4) peut être chauffée au moyen du dispositif de chauffage (5).

11. Dispositif selon la revendication 10, **caractérisé en ce que** la garniture de tuyère (4) et le dispositif de chauffage (5) sont disposés fixement dans le corps de tuyère (7) ou une pièce du corps de tuyère (7a).

12. Dispositif selon une ou plusieurs des revendications 1 à 9, **caractérisé en ce que** la garniture de tuyère (4) est réglable en angle du moins autour d'un axe par rapport au corps de tuyère (7) ou à une partie du corps de tuyère (7).
